Europäisches Patentamt

European Patent Office

Office européen des brevets

(19)

(11) Veröffentlichungsnummer: **0 234 257**
**B1**

(12) ## EUROPÄISCHE PATENTSCHRIFT

(45) Veröffentlichungstag der Patentschrift:
22.11.90

(51) Int. Cl.⁵: **H04N 17/00**

(21) Anmeldenummer: 87100706.8

(22) Anmeldetag: 20.01.87

(54) Verfahren zur digitalen Übertragung von Prüfsignalen in Pruefzeilen eines Videosignals.

(30) Priorität: 23.01.86 DE 3601991

(43) Veröffentlichungstag der Anmeldung:
02.09.87 Patentblatt 87/36

(45) Bekanntmachung des Hinweises auf die Patenterteilung:
22.11.90 Patentblatt 90/47

(84) Benannte Vertragsstaaten:
AT CH DE FR GB IT LI

(56) Entgegenhaltungen:
US-A- 4 215 367

NHK LABORATORIES NOTE, Nr. 216, September 1977,
Seiten 1-13, Tokyo, JP; Y. NUMAGUCHI et al.:
"Compatibility and transmission characteristics of
digital signals inserted in the field-blanking interval of a
television signal"

(73) Patentinhaber: Siemens Aktiengesellschaft,
Wittelsbacherplatz 2, D-8000 München 2(DE)

(72) Erfinder: Grallert, Hans-Joachim, Dr.-Ing.,
Tannenfleckstrasse 30, D-8030 Gröbenzell(DE)

**Beschreibung**

Die Erfindung betrifft ein Verfahren nach dem Oberbegriff des Patentanspruchs 1.

Innerhalb eines Videosignals sind im allgemeinen vier Prüfzeilen innerhalb der Vertikalaustastlücke für Prüfsignale reserviert. In diesen Prüfzeilen werden von den Fernsehanstalten und von der Post Prüfsignale übertragen, die eine Beurteilung der Qualität des analogen Übertragungskanals gestatten. Nähere Einzelheiten hierzu sind der CCIR-Rec. 473-3, Genf, 1982 zu entnehmen. Auch bei der gemischten analogen und digitalen Übertragung von Videosignalen sollen die Prüfsignale am Ende der Übertragungsstrecke zur Beurteilung der Übertragungskanäle zur Verfügung stehen.

Es ist die Aufgabe der Erfindung ein Verfahren zur digitalen Übertragung der Prüfsignale anzugeben.

Die Erfindung wird durch die im Patentanspruch 1 angegebenen Merkmale gelöst. Vorteilhafte Ausbildungen der Erfindung sind in den Unteransprüchen angegeben.

Besonders vorteilhaft wirkt sich die Differenzbildung zwischen Prüfsignal und Norm-Prüfsignal aus. Es müssen folglich nur noch die im allgemeinen kleinen Werte der Differenzen übertragen werden. Hierdurch wird bereits die Datenrate wesentlich reduziert. Eine weitere Reduktion wird durch eine geeignete Quantisierung der zu übertragenden Differenzen erreicht.

Die Differenzen können vorteilhaft PCM-codiert (Pulscode-Modulation) übertragen werden, wodurch eine Fehlerfortpflanzung, wie sie bei der DPCM (Differenz-Pulscode-Modulation) auftritt, vermieden wird. Aber auch bei einer DPCM-Übertragung wirkt sich die Differenzbildung vorteilhaft aus, da Amplitudensprünge und rasche Amplitudenveränderungen beim Differenzsignal weitgehend abgebaut sind. Hierdurch ist auch eine mehrdimensionale, jedoch nur die Zeitachsen (Zeile und entsprechende Prüfzeilen vorangegangener Fernsehbilder) berücksichtigende DPCM-Codierung vorteilhaft anwendbar. Werden nur entsprechende rekonstruierte Abtastwerte der Prüfsignale aus vorangegangenen Fernsehbildern zur Ermittlung von Schätzwerten verwendet, so werden - außer bei kurzzeitigen Störungen - als DPCM-Signalwerte nur logische Nullen übertragen. Bei der Anwendung einer Optimalcodierung führt dies zu einer weiteren Datenreduktion. Dafür kann andererseits die Abtastrate für das Prüfsignal entsprechend erhöht werden und Maßnahmen zur Sicherung gegen Übertragungsfehler durchgeführt werden. Am Ende einer digitalen Übertragungsstrecke ist hierdurch auch die Ermittlung der Bit- oder Zeichenfehlerrate möglich.

Die Differenzbildung kann sowohl bei analogen als auch bei digitalen Signalen erfolgen. Aus Aufwandsgründen ist zunächst die Abtastung des Prüfsignals und die weitere digitale Verarbeitung vorzuziehen.

Das Verfahren wird anhand von Prinzipschaltbildern näher erläutert.

Es zeigen

Fig. 1 ein Prinzipschaltbild der Codiereinrichtung,
Fig. 2 einen Prüfzeilen-Coder und
Fig. 3 zur Ermittlung eines Schätzwertes verwendete Abtastwerte.

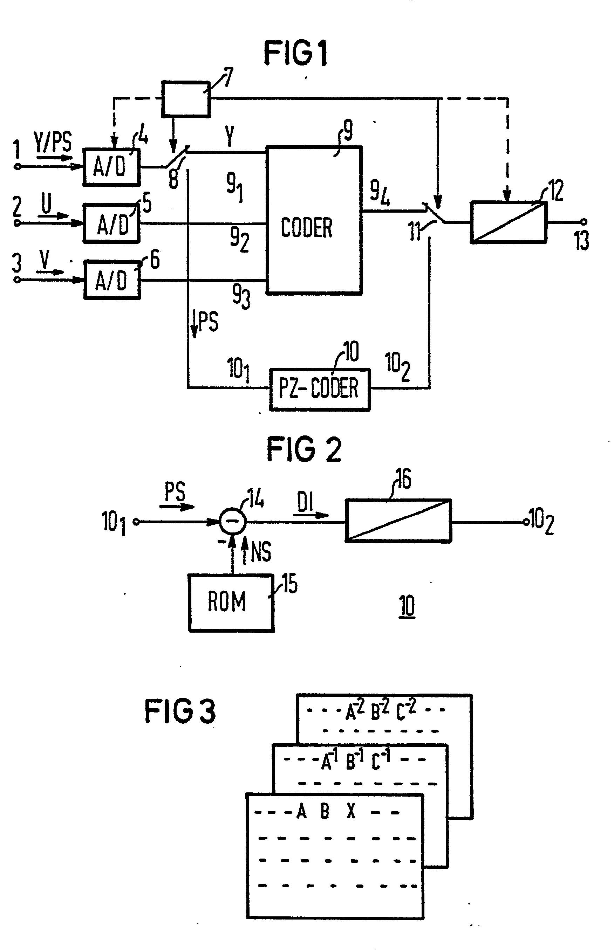

Der in Fig. 1 dargestellte Coder enthält drei Analog-Digital-Umsetzer 4,5,6, deren Eingängen 1,2 und 3 das Luminanzsignal Y und die Chrominanzsignale U und V zugeführt werden. Die Ausgänge der Analog-Digital-Umsetzer sind mit den Eingängen $9_1$, $9_2$ und $9_3$ eines Bildcoders 9 verbunden, dessen Ausgang $9_4$ mit einem Datensicherungs-Coder 12 verbunden ist. Zwischen dem Ausgang des ersten Analog-Digital-Umsetzers 4 und dem ersten Eingang $9_1$ des Bildcoders ist ein erster Umschalter 8 eingefügt, der den Ausgang des ersten Analog-Digital-Umsetzers wahlweise mit dem ersten Eingang $9_1$ des Bildcoders oder mit dem Eingang $10_1$ eines Prüfzeilen-Coders 10 (PZ-Coder) verbindet. Dem Eingang des Datensicherungs-Coders 12 ist ein zweiter Umschalter 11 vorgeschaltet, über den wahlweise der Ausgang des Bildcoders 9 oder der Ausgang $10_2$ des Prüfzeilen-Coders angeschaltet werden kann. Eine Steuerung 7 betätigt die beiden Umschalter, wenn eine Prüfzeile codiert werden soll. Gegebenenfalls schaltet die Steuerung 7 auch noch die Abtastrate des ersten Analog-Digital-Umsetzers 4 um und ändert die Codierung des Datensicherungs-Coders 12. Bei dem Bildcoder 9 kann es sich beispielsweise um einen DPCM-Coder, einen PCM-Coder oder um einen Transformationscoder handeln.

Während einer Prüfzeile wird dem Eingang 1 statt des üblichen Luminanzsignals Y das Prüfsignal PS zugeführt, abgetastet und digitalisiert. Im Prüfzeilen-Coder 10 wird eine besonders für das Prüfsignale geeignete Codierung durchgeführt; die so erhaltenen Signalwerte werden gegebenenfalls quantisiert und gegebenenfalls mit Hilfe eines Optimalcodes ausgegeben. Die so codierten Prüfsignale werden den Datensicherungs-Coder 12 zugeführt und mit Hilfe eines fehlererkennenden oder eines fehlerkorrigierenden Codes gesichert. Der Datensicherungs-Coder kann auch bereits im Prüfzeilen-Coder 10 oder im Bildcoder 9 enthalten sein. Da der Bildcoder während des Übertragens von Prüfzeilen nicht benötigt wird, kann er - entsprechend umgeschaltet - auch als Prüfzeilen-Coder eingesetzt werden.

In Fig. 2 ist der Prüfzeilen-Coder 10 ausführlicher dargestellt. Er enthält einen Subtrahierer 14, dem das Prüfsignal PS zugeführt wird. Am Subtraktionseingang ist ein Lesespeicher 15 (ROM) angeschaltet. Der Ausgang des Subtrahierers ist mit dem Eingang eines Codierers 16 verbunden.

Den Eingängen des Subtrahierers 14 wird das Prüfsignal PS und ein Norm-Prüfsignal NS zugeführt, das aus dem Lesespeicher 15 ausgelesen wird. Das Differenzsignal DI wird dem Codierer 16 zugeleitet. Dieser setzt die Differenzen beispielsweise in PCM-codierte Signale um, wobei im allgemeinen gleichzeitig eine Quantisierung durchgeführt wird, zweckmäßigerweise nach einer logarithmischen Kennlinie. Handelt es sich nur um eine einzige Übertragungsstrecke, so kann auf das Vorzeichen des Differenzsignals eventuell verzichtet werden, wenn nur der Betrag der Störungen auf der analogen Übertragungsstrecke interessant ist.

Als Codierer kann auch ein üblicher DPCM-Codierer verwendet werden. Zur Berechnung der Schätzwerte werden zweckmäßigerweise nur vorangegangene (rekonstruierte) Abtastwerte A, B, ... derselben Prüfzeile oder von entsprechenden Prüfzeilen vorangegangener Fernsehbilder verwendet, wie dies in Fig. 3 dargestellt ist.

Für die Berechnung eines DPCM-Signalwertes gilt:

(1) $\Delta s = s - \hat{s}$

wobei sich der Schätzwert beispielsweise berechnet nach:

$$(2) \quad \hat{s} = \frac{1}{8}A + \frac{1}{4}B + \frac{1}{8}A^{-1} + \frac{1}{4}B^{-1} + \frac{1}{4}C^{-1}$$

Ebenso können auch zur Berechnung des Schätzwertes nur dem aktuellen Bildsignalwert X entsprechende rekonstruierte Abtastwerte $C^{-1}$, $C^{-2}$, $C^{-3}$, ... verwendet werden, beispielsweise:

$$(3) \quad \hat{s} = \frac{1}{2}C^{-1} + \frac{1}{2}C^{-2}$$

oder auch nur der dem aktuellen Abtastwert X entsprechende rekonstruierte Abtastwerte $C^{-1}$ des vorangegangenen Fernsehbildes verwendet werden:

(4) $\hat{s} = C^{-1}$

Es ist selbstverständlich, daß Bausteine des Bildcoders und des Prüfzeilen-Coders - wenn möglich - im Zeitmultiplexbetrieb verwendet werden können.

Empfangsseitig kann das übertragene Differenzsignal direkt als Kriterium für die Qualität der Übertragungsstrecke gewertet werden. Ebenso kann unter Verwendung des Norm-Prüfsignals NS das ursprüngliche Prüfsignal wiedergewonnen werden. Sollen mehrere analoge und digitale Übertragungsstrecken in Serie geschaltet werden und sollen eine Qualitätsbewertung aller analogen Übertragungsstrecken gemeinsam erfolgen, so muß das Prüfsignal möglichst genau rekonstruiert werden, wodurch auch das Differenzsignal DI zwischen Prüfsignal und Norm-Prüfsignal mit einer entsprechenden Genauigkeit zu übertragen ist.

**Patentansprüche**

1. Verfahren zur digitalen Übertragung von Prüfsignalen (PS) in Prüfzeilen der Vertikalaustastlücke eines Videosignals, dadurch gekennzeichnet, daß sendeseitig zwischen dem empfangenen analogen Prüfsignal (PS) und einem Norm-Prüfsignal (NS) ein digitales Differenzsignal (DI) gebildet und in das digitalisierte Videosignal eingefügt wird.

2. Verfahren nach Anspruch 1, dadurch gekennzeichnet, daß das analoge Prüfsignal (PS) abgetastet und digitalisiert wird und das digitale Differenzsignal (DI) durch Vergleich mit einem digitalen Norm-Prüfsignal (PS) gebildet wird.

3. Verfahren nach Anspruch 1 oder Anspruch 2, dadurch gekennzeichnet, daß das Differenzsignal (DI) PCM-codiert übertragen wird.

4. Verfahren nach Anspruch 1 oder Anspruch 2, dadurch gekennzeichnet, daß das Differenzsignal (DI) DPCM-codiert übertragen wird.

5. Verfahren nach Anspruch 1, dadurch gekennzeichnet, daß das Vorzeichen des Differenzsignals (DI) vor der Übertragung unterdrückt wird.

6. Verfahren nach einer der vorhergehenden Ansprüche, dadurch gekennzeichnet, daß zur Übertragung des Differenzsignals (DI) ein Optimalcode vorgesehen ist.

7. Verfahren nach Anspruch 1, dadurch gekennzeichnet, daß das Differenzsignal in wenigen Amplitudenstufen (n = 4 bis 8) quantisiert übertragen wird.

8. Verfahren nach Anspruch 3 oder Anspruch 4, dadurch gekennzeichnet, daß zur Datensicherung des Differenzsignals (DI) ein fehlerkennender/fehlerkorrigierender Code verwendet wird.

9. Verfahren nach Anspruch 2, dadurch gekennzeichnet, daß die Abtastrate für das Prüfsignal (PS) über der Abtastrate für das Luminanzsignal (Y) liegt.

10. Verfahren nach Anspruch 8, dadurch gekennzeichnet, daß empfangsseitig Bit- und/oder Zeichenfehlerrate des digital übertragenen Prüfsignals (PS) ermittelt werden.

## Claims

1. Method for the digital transmission of test signals (PS) in test lines of the vertical blanking interval of a video signal, characterized in that a digital differential signal (DI) is formed on the transmitting side between the received analog test signal (PS) and a standard test signal (NS) and is inserted into the digitized video signal.

2. Method according to claim 1, characterized in that the analog test signal (PS) is scanned and digitized and the digital differential signal (DI) is formed by comparison with a digital standard test signal (PS).

3. Method according to claim 1 or claim 2, characterized in that the differential signal (DI) is transmitted in PCM coded form.

4. Method according to claim 1 or claim 2, characterized in that the differential signal (DI) is transmitted in DPCM coded form.

5. Method according to claim 1, characterized in that the sign of the differential signal (DI) is suppressed before the transmission.

6. Method according to one of the preceding claims, characterized in that an optimum code is provided for transmitting the differential signal (DI).

7. Method according to claim 1, characterized in that the differential signal is transmitted in quantized form in a small number of amplitude stages (n = 4 to 8).

8. Method according to claim 3 or claim 4, characterized in that an error detecting/error correcting code is used for the data protection of the differential signal (DI).

9. Method according to claim 2, characterized in that the scanning rate for the test signal (PS) is above the scanning rate for the luminance signal (Y).

10. Method according to claim 8, characterized in that on the receiving side the bit error rate and/or character error rate of the digitally transmitted test signal (PS) is determined.

## Revendications

1. Procédé de transmission numérique de signaux de contrôle (PS) dans des lignes de test de l'intervalle de suppression vertical d'un signal vidéo, caractérisé par le fait qu'un signal de différence numérique (DI) est formé, côté émission, entre le signal de contrôle analogique reçu (PS) et un signal de contrôle normalisé (NS) et est inséré dans le signal vidéo numérisé.

2. Procédé selon la revendication 1, caractérisé par le fait que le signal de contrôle analogique (PS) est échantillonné et numérisé et que le signal de différence numérique (DI) est formé par comparaison à un signal de contrôle normalisé numérique (PS).

3. Procédé suivant la revendication 1 ou 2, caractérisé par le fait que le signal de différence (DI) est transmis en étant codé selon un codage MIC.

4. Procédé suivant la revendication 1 ou 2, caractérisé par le fait que le signal de différence (DI) est transmis en étant codé selon un codage MDIC.

5. Procédé selon la revendication 1, caractérisé par le fait que le signe du signal de différence (DI) est supprimé avant la transmission.

6. Procédé suivant l'une des revendications précédentes, caractérisé par le fait que pour la transmission du signal de différence (DI), il est prévu un code optimal.

7. Procédé suivant la revendication 1, caractérisé par le fait que le signal de différence est transmis en étant quantifié selon un petit nombre d'échelons d'amplitude (n = 4 à 8)

8. Procédé suivant la revendication 3 ou 4, caractérisé par le fait que pour la sécurité des données du signal de différence (DI), on utilise un code identifiant/corrigeant les erreurs.

9. Procédé suivant la revendication 2, caractérisé par le fait que la fréquence d'échantillonnage pour le signal de contrôle (PS) est supérieure à la fréquence d'échantillonnage pour le signal de luminance (Y).

10. Procédé suivant la revendication 8, caractérisé par le fait que la fréquence d'erreurs sur les bits et/ou sur les signes du signal de contrôle transmis sous forme numérique (PS) est déterminée côté réception.

# FIG 1

# FIG 2

# FIG 3